(19) 

Europäisches
Patentamt
European
Patent Office
Office européen
des brevets

(11) **EP 4 432 553 A1**

(12) **EUROPEAN PATENT APPLICATION**
published in accordance with Art. 153(4) EPC

(43) Date of publication:
**18.09.2024 Bulletin 2024/38**

(21) Application number: **22913079.4**

(22) Date of filing: **29.04.2022**

(51) International Patent Classification (IPC):
*H02P 29/028* (2016.01)   *H02P 25/22* (2006.01)
*H02P 21/18* (2016.01)   *H02P 29/024* (2016.01)
*H02P 27/06* (2006.01)   *H02P 21/14* (2016.01)

(52) Cooperative Patent Classification (CPC):
**H02P 21/14; H02P 21/18; H02P 25/22;
H02P 27/06; H02P 29/024; H02P 29/028;
Y02T 10/72**

(86) International application number:
**PCT/CN2022/090571**

(87) International publication number:
**WO 2023/123783 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2021  CN 202111670099**

(71) Applicant: **Xiaomi EV Technology Co., Ltd.
100176 Beijing (CN)**

(72) Inventor: **LUO, Wenhui
Beijing 100176 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **MULTI-PHASE MOTOR CONTROL METHOD AND APPARATUSES AND READABLE STORAGE MEDIUM**

(57)    Provided are multi-phase motor control method and apparatus, and a readable storage medium. The method includes: acquiring a current position of a rotor of a multi-phase motor on a condition that the multi-phase motor has a phase loss fault; determining a target region to which the rotor currently belongs in a voltage vector space of the multi-phase motor according to the current position of the rotor, where the voltage vector space is pre-divided into a plurality of regions, and the target region is one of the plurality of regions; and controlling the multi-phase motor based on a control policy corresponding to the target region. Accordingly, fault-tolerant control of a motor can be realized without additionally adding devices and changing a hardware structure, so that the reliability of an electric driving system can be improved.

**EP 4 432 553 A1**

Acquire a current position of a rotor of a multi-phase motor in the case that the multi-phase motor has a phase loss fault — S31

Determine a target region to which the rotor currently belongs in a voltage vector space of the multi-phase motor according to the current position of the rotor — S32

Control the multi-phase motor on the basis of a control policy corresponding to the target region — S33

Fig. 3

# Description

## CROSS-REFERENCE TO RELATED APPLICATIONS

The disclosure claims priority to Chinese Patent Application No. 202111670099.2, filed to the China Patent Office on December 31, 2021 and entitled "Multi-phase Motor Control Method and Apparatus and Readable Storage Medium", entire contents of which are incorporated here by reference.

## TECHNICAL FIELD

The disclosure relates to the technical field of multi-phase motor controlling, in particular to a multi-phase motor control method and apparatus and a readable storage medium.

## BACKGROUND

With popularization of a new energy vehicle, higher demands are raised by people for an electric driving system for providing a power source for the vehicle, and among them, the demand for the reliability of the electric driving system is stricter. When the electric driving system breaks down, a fault-tolerant running mechanism with high robustness is needed so as to avoid the problem that the electric driving system cannot provide power for the vehicle. Usually, the electric driving system includes a multi-phase motor and an inverter used for controlling the motor, and when a certain phase of the motor has a phase loss fault, the motor cannot run normally, and then the electric driving system cannot provide power for the vehicle.

## SUMMARY

In order to overcome the problem in the related art, the disclosure provides a multi-phase motor control method and apparatus and a readable storage medium.

According to a first aspect of an example of the disclosure, a multi-phase motor control method is provided and includes:

acquiring a current position of a rotor of a multi-phase motor on a condition that the multi-phase motor has a phase loss fault;

determining a target region to which the rotor currently belongs in a voltage vector space of the multi-phase motor according to the current position of the rotor, where the voltage vector space is pre-divided into a plurality of regions, and the target region is one of the plurality of regions; and

controlling the multi-phase motor based on a control policy corresponding to the target region.

Optionally, the plurality of regions includes a first region and a second region, and the voltage vector space is divided into the plurality of regions in the following manner:

determining a half-bridge state of a target phase to which the phase loss fault occurs on a condition that the multi-phase motor has the phase loss fault;

determining a controllable voltage vector in the voltage vector space according to the half-bridge state of the target phase, where the controllable voltage vector includes a controllable fundamental voltage vector and a controllable zero vector voltage; and

obtaining the first region and the second region by dividing the voltage vector space according to the controllable voltage vector and a rotation direction of the multi-phase motor, where the first region and the second region each include a controllable fundamental voltage vector, a magnetic field force direction of a first controllable fundamental voltage vector included in the first region is the same as the rotation direction of the multi-phase motor, and a magnetic field force direction of a second controllable fundamental voltage vector included in the second region is opposite to the rotation direction of the multi-phase motor.

Optionally, controlling the multi-phase motor based on the control policy corresponding to the target region includes:
determining the control policy corresponding to the target region to be a single voltage vector control policy in response to determining that the target region is the first region, and controlling the multi-phase motor based on the single voltage vector control policy.

Optionally, controlling the multi-phase motor based on the single vector control policy includes:

determining a target voltage vector of the multi-phase motor according to the current position of the rotor;

determining a rotation angle of the target voltage vector rotating to a position of the first controllable fundamental voltage vector included in the first region in the rotation direction of the multi-phase motor;

determining a first duration of action of the first controllable fundamental voltage vector according to the rotation angle and the target voltage vector; and

controlling the multi-phase motor for the first duration with the first controllable fundamental voltage vector, and controlling the multi-phase motor for a second duration with the controllable zero vector voltage in response to determining that the first duration ends, where a sum of the first duration and the second duration is a control period.

Optionally, determining the first duration of action of the first controllable fundamental voltage vector according to the rotation angle and the target voltage vector includes:

determining the first duration of action of the first controllable fundamental voltage vector through the following formula:

$$ t1 = f\left(\delta\right) * U_{ref} $$

where t1 represents the first duration, $U_{ref}$ represents the target voltage vector, and $f(\delta)$ is an increasing function of the rotation angle $\delta$.

Optionally, controlling the multi-phase motor based on the control policy corresponding to the target region includes:
determining the control policy corresponding to the target region to be a zero vector voltage control policy in response to determining that the target region is the second region, and controlling the multi-phase motor within a current control period based on the controllable zero vector voltage.

Optionally, the plurality of regions further include a third region composed of the controllable fundamental voltage vector, and controlling the multi-phase motor based on the control policy corresponding to the target region includes:
determining the control policy corresponding to the target region to be a space vector pulse width modulation control policy in response to determining that the target region is the third region, and controlling the multi-phase motor based on the space vector pulse width modulation control policy.

According to a second aspect of an example of the disclosure, a multi-phase motor control apparatus is provided and includes:

an acquiring module, configured to acquire a current position of a rotor of a multi-phase motor on a condition that the multi-phase motor has a phase loss fault;

a first determining module, configured to determine a target region to which the rotor currently belongs in a voltage vector space of the multi-phase motor according to the current position of the rotor, where the voltage vector space is pre-divided into a plurality of regions, and the target region is one of the plurality of regions; and

a control module, configured to control the multi-phase motor based on a control policy corresponding to the target region.

Optionally, the plurality of regions include a first region and a second region, and the apparatus further includes:

a second determining module, configured to determine a half-bridge state of a target phase to which the phase loss fault occurs on a condition that the multi-phase motor has the phase loss fault;

a second determining module, configured to determine a controllable voltage vector in the voltage vector space according to the half-bridge state of the target phase, where the controllable voltage vector includes a controllable fundamental voltage vector and a controllable zero vector voltage; and

a dividing module, configured to obtain the first region and the second region by dividing the voltage vector space according to the controllable voltage vector and a rotation direction of the multi-phase motor, where the first region and the second region each include a controllable fundamental voltage vector, a magnetic field force direction of a first controllable fundamental voltage vector included in the first region is the same as the rotation direction of the multi-phase motor, and a magnetic field force direction of a second controllable fundamental voltage vector included in the second region is opposite to the rotation direction of the multi-phase motor.

Optionally, the control module includes:
a first determining sub-module, configured to determine the control policy corresponding to the target region to be a single voltage vector control policy in response to determining that the target region is the first region, and control the multi-phase motor based on the single voltage vector control policy.

Optionally, the first determining sub-module includes:

a second determining sub-module, configured to determine a target voltage vector of the multi-phase motor according to the current position of the rotor;

a third determining sub-module, configured to determine a rotation angle of the target voltage vector rotating to a position of the first controllable fundamental voltage vector included in the first region in the rotation direction of the multi-phase motor;

a fourth determining sub-module, configured to determine a first duration of action of the first controllable fundamental voltage vector according to the rotation angle and the target voltage vector; and

a control sub-module, configured to control the multiphase motor for the first duration with the first controllable fundamental voltage vector, and control the multi-phase motor for a second duration with the controllable zero vector voltage in response to determining that the first duration ends, where a sum of the first duration and the second duration is a control period.

Optionally, the fourth determining sub-module is configured to: determine the first duration of action of the first controllable fundamental voltage vector through the following formula:

$$t1 = f(\delta) * U_{ref}$$

where t1 represents the first duration, $U_{ref}$ represents the target voltage vector, and $f(\delta)$ is an increasing function of the rotation angle $\delta$.

Optionally, the control module includes:
a fifth determining sub-module, configured to determine the control policy corresponding to the target region to be a zero vector voltage control policy in response to determining that the target region is the second region, and control the multi-phase motor within a current control period based on the controllable zero vector voltage.

Optionally, the plurality of regions further include a third region composed of the controllable fundamental voltage vector, and the control module includes:
a sixth determining sub-module, configured to determine the control policy corresponding to the target region to be a space vector pulse width modulation control policy in response to determining that the target region is the third region, and control the multi-phase motor based on the space vector pulse width modulation control policy.

According to a third aspect of an example of the disclosure, a multi-phase motor control apparatus is provided and includes:

a processor; and

a memory configured to store instructions executable by the processor;

where the processor is configured to:

acquire a current position of a rotor of a multi-phase motor on a condition that the multi-phase motor has a phase loss fault;

determine a target region to which the rotor currently belongs in a voltage vector space of the multi-phase motor according to the current position of the rotor, where the voltage vector space is pre-divided into a plurality of regions, and the target region is one of the plurality of regions; and

control the multi-phase motor based on a control policy corresponding to the target region.

According to a fourth aspect of an example of the disclosure, a computer-readable storage medium is provided, storing computer program instructions, the program instructions, when executed by a processor, implementing steps of the multi-phase motor control method provided by the first aspect of the disclosure.

According to a fifth aspect of an example of the disclosure, a computer program product is provided, the computer program product includes a computer program capable of being executed by a programmable apparatus, and the computer program which is used for executing, when executed by the programmable apparatus, steps of the multi-phase motor control method provided by a first solution of the disclosure.

Technical solutions provided by the examples of the disclosure may include the following beneficial effects.

By adopting the above technical solutions, when the multi-phase motor has the phase loss fault, the target region to which the rotor belongs may be determined according to the position of the rotor, the multi-phase motor is controlled based on the control policy corresponding to the target region, accordingly, fault-tolerant control of a motor can be realized without additionally adding devices and changing a hardware structure, so that the reliability of an electric driving system can be improved.

It is to be understood that the above general description and the following detailed description are merely examples and explanatory instead of limiting the disclosure.

BRIEF DESCRIPTION OF DRAWINGS

The above and/or additional aspects and strengths of the disclosure will be clear and easy to understand from the following description of examples with reference to accompanying drawings.

Fig. 1 is a topological graph of an inverter shown according to an example.

Fig. 2 is a topological graph of another inverter shown according to an example.

Fig. 3 is a flowchart of a multi-phase motor control method shown according to an example.

Fig. 4 is a topological graph of an inverter for controlling a three-phase motor shown according to an example.

Fig. 5 is a schematic diagram of a voltage vector space of a three-phase motor shown according to an example.

Fig. 6 is a flowchart of dividing a voltage vector space into a plurality of regions shown according to an example.

Fig. 7 is a schematic diagram of a voltage vector space of another three-phase motor shown according to an example.

Fig. 8 is a flowchart of another multi-phase motor control method shown according to an example.

Fig. 9 is a flowchart of a single voltage vector control policy shown according to an example.

Fig. 10 is a block diagram of a multi-phase motor control apparatus shown according to an example.

Fig. 11 is a block diagram of a multi-phase motor control apparatus shown according to an example.

DETAILED DESCRIPTION OF THE INVENTION

Examples will be described in detail here, and their instances are represented in the accompanying drawings. Unless otherwise indicated, when the following description refers to the accompanying drawings, the same number in the different accompanying drawings represents the same or similar elements. Implementations described in the following examples do not represent all implementations consistent with the disclosure. Rather, they are merely examples of an apparatus and method consistent with some aspects of the disclosure as detailed in the appended claims.

In actual application, a power switch in an electric driving system is a device prone to breaking down, so a motor usually fails in normal running due to failure of the power switch. For example, in a single-phase motor control mode in the related art, when any power switch fails, a connection of a phase where the failure power switch is located is cut off directly through a high-power device (such as a switch and a fuse), control is performed by using the rest of two phases of coils, and in this case, control of a single-phase motor seems to be formed. In this control mode, output power of the motor is reduced greatly. Output torque is overlay of positive sequence torque and negative sequence torque, and the negative sequence torque is increased with decreasing of a rotation speed. When a rotation speed of the motor is 0, the positive sequence torque is equal to the negative sequence torque, the output torque of the motor is 0, and thus in this running mode, the motor does not has starting capability.

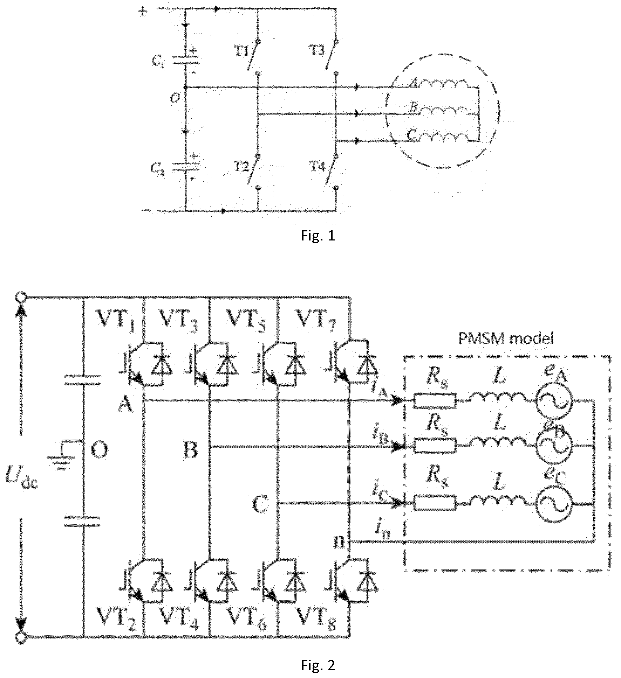

For another example, in a two-phase four-switch control mode in the related art, when a certain power switch fails, a phase where this power switch is located is connected to a midpoint of two bus capacitors, and the two other phases form two-phase four-switch fault-tolerant control. As shown in Fig. 1, it is assumed that a phase where a failure switch is located is a phase A, then the phase A needs to be connected to a midpoint O of C1 and C2, and a phase B and a phase C form two-phase four-switch fault-tolerant control. In Fig. 1, the phase B is connected with a power switch T1 and a power switch T2, and the phase C is connected with a power switch T3 and a power switch T4. This structure needs to add devices such as a large-current fuse and thyristor, cost and a size will be increased noticeably, meanwhile, fluctuation of voltages of bus capacitors is caused, performance of an output voltage is affected, and consequently motor harmonic loss and torque pulsation are increased.

For another example, in a hardware half-bridge redundancy control mode in the related art, as shown in Fig. 2, in this control mode, extra one or more half bridges need to be added based on an original three-phase half bridge, and thus fault-tolerant control is realized through switching of different topologies. In this way, cost and the size will be increased noticeably, and it is not suitable for the field of vehicles.

Accordingly, the fault-tolerant control modes for the motor in the related art have the following drawbacks: 1) in the related art, some devices need to be added more or less for the phase loss fault-tolerant control of the motor, and an original hardware structure is changed, which not only causes increase of cost, but also increases a size of a motor controller and reduces reliability; and 2) the single-phase motor fault-tolerant control mode is a solution with a relatively small change of hardware, but this solution cannot realize starting of the motor, and the output torque is very small in a low-speed working condition.

In view of this, the disclosure provides a multi-phase motor control method and apparatus and a readable storage medium, accordingly, fault-tolerant control of a motor can be realized without additionally adding devices and changing a hardware structure, so that the reliability of an electric driving system can be improved.

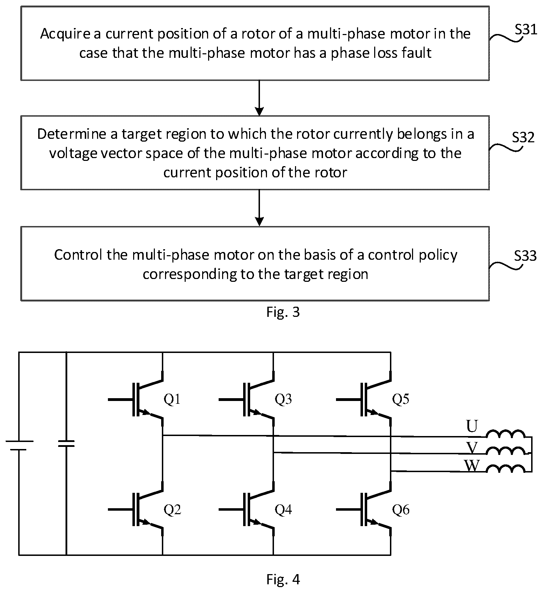

Fig. 3 is a flowchart of a multi-phase motor control method shown according to an example. As shown in Fig. 3, the method may include the following steps.

In step S31, a current position of a rotor of a multi-phase motor is acquired on a condition that the multi-phase motor has a phase loss fault.

The multi-phase motor may be a three-phase motor, a four-phase motor, a five-phase motor and the like, which is not specifically limited by the disclosure.

When an inverter for controlling the multi-phase motor breaks down or a certain or some circuits between the inverter and the motor are cut off, a certain phase or a plurality of phases of the multi-phase motor have no current input, namely, the multi-phase motor has a phase loss fault. The multi-phase motor control method provided by the disclosure is a control method after the multi-phase motor has the phase loss fault.

In a possible manner, whether the multi-phase motor has the phase loss fault may be determined by detecting whether each phase of the multi-phase motor has a current input. For example, if a certain phase of the multi-phase motor has no current input, it is considered that the phase has a fault, namely, the multi-phase motor has the phase loss fault. In another possible manner, given that a power switch in the inverter is a device prone to breaking down, whether a power switch connected with each phase is in a failure state may be detected, and if a certain power switch is in a failure state, it is determined that the phase connected with the power switch has a fault, namely, the multi-phase motor has the phase loss fault. For example, the power switch is connected with a driving chip, the driving chip may report a state of the power switch, and thus whether the power switch is in the failure state may be determined according to the state of the power switch reported by the driving chip.

The current position of the rotor of the multi-phase motor is acquired in the case of determining that the multi-phase motor has the phase loss fault. For example, the current position of the rotor may be detected through a sensor.

In step S32, a target region to which the rotor currently belongs in a voltage vector space of the multi-phase motor is determined according to the current position of the rotor. The voltage vector space is pre-divided into a plurality of regions, and the target region is one of the plurality of regions. It is worth noting that a specific implementation of dividing the voltage vector space into the plurality of regions will be described in detail below.

It is worth noting that the voltage vector space of the motor differs along with the difference of the number of phases. Taking the following three-phase motor as an example, the voltage vector space of the three-phase motor is described.

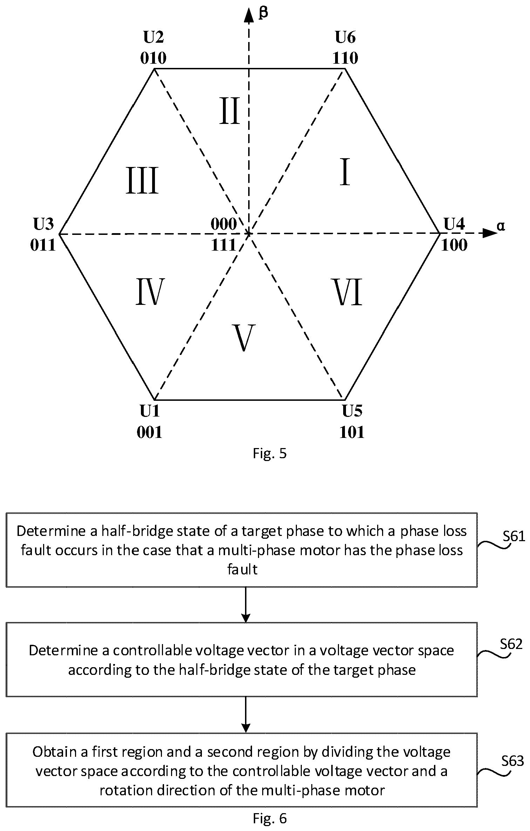

Fig. 4 is a topological graph of an inverter for controlling a three-phase motor shown according to an example. As shown in Fig. 4, the inverter usually adopts a three-phase full-bridge module for driving the motor. The three-phase full-bridge module includes six power switches. A phase U of the three-phase motor is connected with the power switches Q1 and Q2, a phase V of the three-phase motor is connected with power switches Q3 and Q4, and a phase W of the three-phase motor is connected with power switches Q5 and Q6. As shown in Fig. 5, the voltage vector space of the three-phase motor may include six fundamental voltage vectors and two zero vector voltages, the six fundamental voltage vectors are respectively 001 (U1), 101 (U5), 100 (U4), 110 (U6), 010 (U2), 011 (U3), and the two zero vector voltages are 000 (U0) and 111 (U7). In each voltage vector, 0 represents that an upper half bridge of a phase corresponding to a position where it is located is cut off and a lower half bridge is closed, and 1 represents that an upper half bridge of a phase corresponding to a position where it is located is closed and a lower half bridge is cut off. For example, 001 represents that upper half bridges of the phase U and the phase V of the three-phase motor are cut off and lower half bridges are closed, and an upper half bridge of the phase W is closed and a lower half bridge is cut off. An effective current is not generated in a power switch state represented by the two zero vector voltages 000 and 111.

In the disclosure, the voltage vector space may be pre-divided into the plurality of regions, and during application, the target region to which the rotor currently belongs in the voltage vector space is determined according to the current position of the rotor.

For example, the current position of the rotor may include an included angle between the rotor and a preset coordinate axis in a stationary coordinate system in the voltage vector space. The target region to which the rotor currently belongs in the voltage vector space is determined according to the included angle. For example, as shown in Fig. 5, it is assumed that the voltage vector space is pre-divided into three regions, a sector II and a sector III form a region, a sector IV and a sector V form a region, a sector VI and a sector I form a region, the preset coordinate axis in the stationary coordinate system $\alpha\beta$ is a coordinate axis $\alpha$, and the coordinate axis $\alpha$ coincides with a direction of the voltage U4. If the included angle between the rotor and the preset coordinate axis in the stationary coordinate system in the voltage vector space is greater than 60° and less than or equal to 180°, it is determined that the target region to which the rotor currently belongs in the voltage vector space is the region formed by the sector II and the sector III, if the included angle is greater than 180° and less than or equal to 300°, it is determined that the target region to which the rotor currently belongs in the voltage vector space is the region formed by the sector IV and the sector V, and if the included angle is less than or equal to 60° or greater than 300° and less than or equal to 360°, it is determined that the target region to which the rotor currently belongs in the voltage vector space is the region formed by the sector VI and the sector I. It is worth noting that the included angle between the rotor and the preset coordinate axis in the stationary coordinate system in the voltage vector space refers to a rotation angle of the preset coordinate axis rotating to a position of the rotor in a rotation direction of the rotor.

In step S33, the multi-phase motor is controlled based on a control policy corresponding to the target region.

In the disclosure, different control policies are preset in different regions, so as to ensure that the multi-phase motor may still start when having the phase loss fault.

By adopting the above technical solutions, when the multi-phase motor has the phase loss fault, the target region to which the rotor belongs may be determined according to the position of the rotor, the multi-phase motor is controlled based on the control policy corresponding to the target region, accordingly, fault-tolerant control of a motor can be realized without additionally adding devices and changing a hardware structure, so that the reliability of an electric driving system can be improved.

In order to make those skilled in the art better understand the multi-phase motor control method provided by the disclosure, the control method provided by the disclosure is described by taking the following three-phase motor as an example.

Firstly, a specific implementation of dividing the voltage vector space into the plurality of regions is described.

Fig. 6 is a flowchart of dividing a voltage vector space into a plurality of regions shown according to an example. As shown in Fig. 6, the method may include the following steps.

In step S61, a half-bridge state of a target phase to which the phase loss fault occurs is determined on a condition that the multi-phase motor has the phase loss fault. The half-bridge state includes a state that the upper half bridge is cut off and the lower half bridge is closed, or a state that the upper half bridge is closed and the lower half bridge is cut off.

For example, it is assumed that an open circuit occurs to the power switch Q4 in Fig. 4, it is determined that the target phase to which the phase loss fault occurs is the phase V of the motor, and a half-bridge state of the phase V is the state that the upper half bridge is closed and the lower half bridge is cut off. For another example, it is assumed that a short circuit occurs to the power switch Q2 in Fig. 4, it is determined that the target phase to which the phase loss fault occurs is the phase U of the motor, and a half-bridge state of the phase U is the state that the upper half bridge is cut off and the lower half bridge is closed.

In step S62, a controllable voltage vector in the voltage vector space is determined according to the half-bridge state of the target phase. The controllable voltage vector includes a controllable fundamental voltage vector and a controllable zero vector voltage.

For example, it is assumed that the target phase is the phase V, and the half-bridge state of the phase V is the state that the upper half bridge is closed and the lower half bridge is cut off, then voltage vectors with the positions 1 corresponding to the phase V in the six fundamental voltage vectors and the two zero vector voltages are determined as the controllable voltage vectors, namely, the determined controllable voltage vectors are 110, 010, 011 and 111, where the controllable fundamental voltage vectors are 110, 010 and 011, and the controllable zero vector voltages are 111.

In step S63, a first region and a second region are obtained by dividing the voltage vector space according to the controllable voltage vector and a rotation direction of the multi-phase motor.

In the disclosure, the first region and the second region each include a controllable fundamental voltage vector, a magnetic field force direction of a first controllable fundamental voltage vector included in the first region is the same as the rotation direction of the multi-phase motor, and a magnetic field force direction of a second controllable fundamental voltage vector included in the second region is opposite to the rotation direction of the multi-phase motor.

It is assumed that in the voltage vector space shown in Fig. 5, the controllable voltage vectors are 110, 010, 011 and 111, and the rotation direction of the multi-phase motor is an anticlockwise direction, then the controllable fundamental voltage vectors are 110 (U6), 010 (U2) and 011 (U3), where the magnetic field force direction provided by the fundamental voltage vector U3 is opposite to the rotation direction of the multi-phase motor, and the magnetic field force direction provided by the fundamental voltage vector U6 is the same as the rotation direction of the multi-phase motor. In this way, the voltage vector space is divided so that the first region including the fundamental voltage vector U6 and the second region including the fundamental voltage vector U3 can be obtained.

For example, the first region may include the sector VI and the sector I in Fig. 5, the first controllable fundamental voltage vector is the fundamental voltage vector 110, the second region may include the sector IV and the sector V, and the second controllable fundamental voltage vector is the fundamental voltage vector 011.

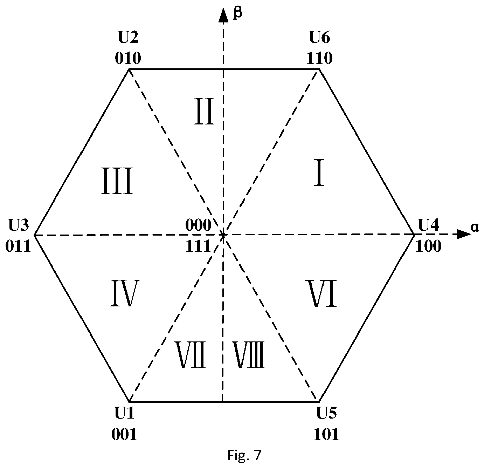

For another example, as shown in Fig. 7, the sector V may be divided into a sub-sector VII and a sub-sector VIII, the first region may include the sub-sector VIII, the sector VI and the sector I, and the second region may include the sector IV and the sub-sector VII. The sector V may be divided into the sub-sector VII and the sub-sector VIII according to any angle ratio, for example, divided into the sub-sector VII and the sub-sector VIII according to an angle ratio 1:2, or divided into the sub-sector VII and the sub-sector VIII according to an angle ratio 3:1, or the like. It is worth noting that the smaller the angle ratio is, namely, the smaller an angle corresponding to the sub-sector VII is, the more prone the rotor of the multi-phase motor is to having reversing rotation, so in order to avoid reversing rotation of the rotor of the multi-phase motor, in the disclosure, the sector V is divided in a dividing manner of an angle ratio 1:1.

Besides, as the fundamental voltage vectors 110, 010 and 011 are controllable, the multi-phase motor may be controlled by using space vector pulse width modulation (SVPWM) or another pulse width modulation (PWM) method when the rotor of the multi-phase motor is located in the sector II and the sector III in the voltage vector space, accordingly, in order to reduce the number of control policies and simplify complexity of the multi-phase motor control method, the sector II and the sector III may be combined into one region, which is called a third region, and the same control mode is adopted. For example, a control policy corresponding to the third region may be a space vector pulse width modulation control policy.

As the controllable fundamental voltage vectors included in the first region, the second region and the third region are different, controlling may be performed by using the different control policies for the three regions. For example, the first region includes the first controllable fundamental voltage vector which is the same as the rotation direction of the multi-phase motor, so the multi-phase motor may be controlled by using the first controllable fundamental voltage vector and the controllable zero vector voltage, namely, the control policy corresponding to the first region is a single voltage vector control policy. The second region includes the second controllable fundamental voltage vector which is opposite to the rotation direction of the multi-phase motor, so the multi-phase motor cannot be controlled by using the second controllable fundamental voltage vector, namely, the multi-phase motor may be controlled merely by using the controllable zero vector voltage, namely, the control policy corresponding to the second region is a zero vector voltage control policy.

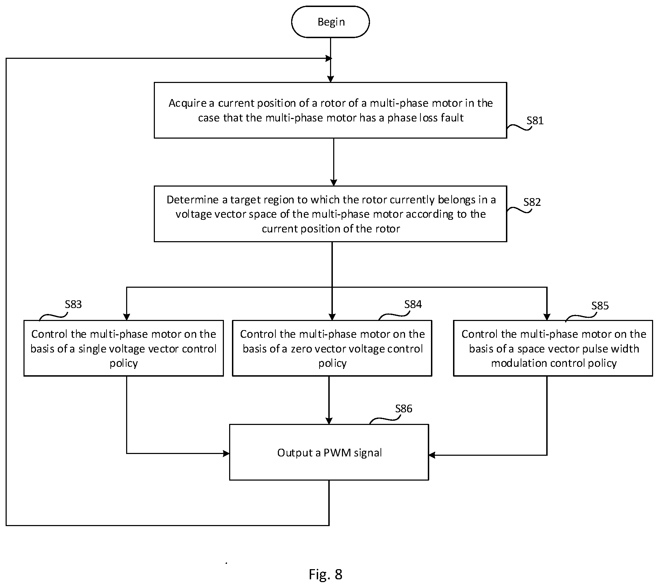

Fig. 8 is a flowchart of another multi-phase motor control method shown according to an example. As shown in Fig. 8, the method may include the following steps.

In step S81, the current position of the rotor of the multi-phase motor is acquired on a condition that the multi-phase motor has the phase loss fault.

In step S82, the target region to which the rotor currently belongs in the voltage vector space of the multi-phase motor is determined according to the current position of the rotor. In response to determining that the target region is the first region, step S83 is performed, if the target region is the second region, step S84 is performed, and if the target region is the third region, step S85 is performed.

In step S83, the multi-phase motor is controlled based on the single voltage vector control policy.

In step S84, the multi-phase motor is controlled based on the zero vector voltage control policy.

In step S85, the multi-phase motor is controlled based on the space vector pulse width modulation control policy.

It is worth noting that control of the multi-phase motor is periodic, the above steps may be performed within each period, so the above steps need to be performed circularly, namely, after step S83, step S84 and step S85, it continues to return to step S81.

In step S86, a PWM signal is outputted.

In the disclosure, no matter which of control policies is used for controlling the multi-phase motor, after determining a duration of action of each voltage vector, a working duration of the voltage vector may be converted into a PWM output.

The single voltage vector control policy, the zero vector voltage control policy and the space vector pulse width modulation control policy provided by the disclosure are described below.

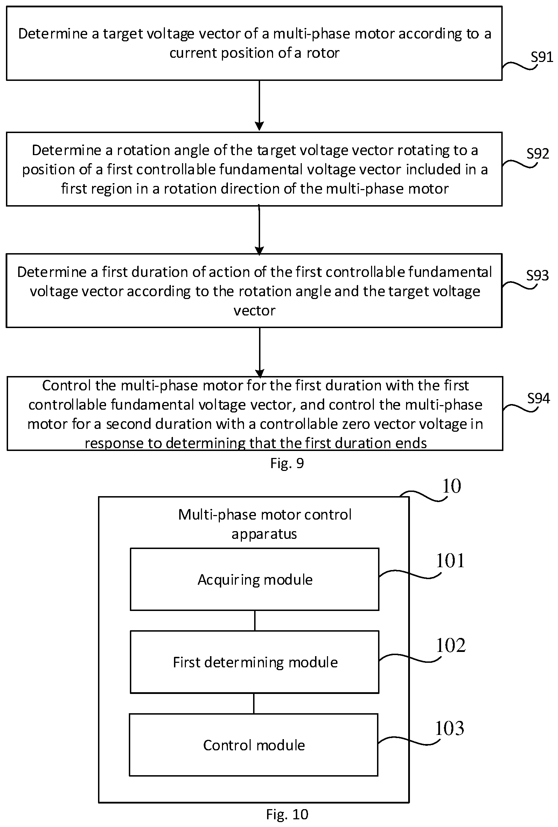

In an example, the control policy corresponding to the target region is determined to be the single voltage vector control policy in response to determining that the target region is the first region, and the multi-phase motor is controlled based on the single voltage vector control policy. For example, as shown in Fig. 9, controlling the multi-phase motor based on the single voltage vector control policy may include the following steps.

In step S91, the target voltage vector of the multi-phase motor is determined according to the current position of the rotor.

For example, the current position of the rotor includes an included angle between the rotor and the preset coordinate axis α, and the included angle is the same as an included angle between the target voltage vector and the preset coordinate axis α. In addition, a target voltage value may be calculated through a formula of calculating a target voltage by using a vehicle speed and requested torque in the related art. The target voltage vector includes the target voltage value and an angle, and the angle is the included angle between the target voltage vector and the preset coordinate axis α.

In step S92, a rotation angle of the target voltage vector rotating to a position of the first controllable fundamental voltage vector included in the first region in the rotation direction of the multi-phase motor is determined.

For example, the first controllable fundamental voltage vector is the voltage vector 110, and the rotation angle δ may be determined through the following formula:

$$\delta = \begin{cases} \dfrac{\pi}{3} - \theta & \theta < \dfrac{\pi}{3} \\ 2\pi + \dfrac{\pi}{3} - \theta & \theta > \dfrac{\pi}{3} \end{cases}$$

where θ is the included angle between the rotor and the preset coordinate axis α, or the included angle between the target voltage vector and the preset coordinate axis α. Besides, a range of the rotation angle δ is related to an angle range corresponding to the first region.

In step S93, a first duration of action of the first controllable fundamental voltage vector is determined according to the rotation angle and the target voltage vector. For example, the first duration of action of the first controllable fundamental voltage vector may be determined through the following formula:

$$t1 = f(\delta) * U_{ref}$$

where t1 represents the first duration, $U_{ref}$ represents the target voltage vector, and $f(\delta)$ is an increasing function of the rotation angle δ. For example, $f(\delta)$ may be a polynomial. The $f(\delta)$ polynomial is not specifically limited by the disclosure. It is worth noting that the selected $f(\delta)$ needs to be meet the following demand: torque outputted after the voltage vector is controlled to act according to a duration t1 calculated based on $f(\delta)$ can remain consistent with torque demanded by a driver during driving.

It is worth noting that the smaller the rotation angle $\delta$ is, it represents that the closer a distance between the rotor and the first controllable fundamental voltage vector, namely, the stronger the action of the first controllable fundamental voltage vector on the rotor is, so, a duration of the action of the first controllable fundamental voltage vector may be shorter, and thus in the disclosure, $f(\delta)$ is the increasing function of the rotation angle $\delta$.

In step S94, the multi-phase motor is controlled for the first duration with the first controllable fundamental voltage vector, and the multi-phase motor is controlled for a second duration with a controllable zero vector voltage in response to determining that the first duration ends. A sum of the first duration and the second duration is a control period.

For example, it is assumed that the control period is T, and the second duration is t2=T-t1, then within one control period, firstly, the voltage vector 110 is controlled to act within the first duration t1 so that the multi-phase motor is controlled by using the voltage vector 110, and then the controllable zero vector voltage 111 is controlled to act within the second duration t2 so that the multi-phase motor is controlled by using the zero vector voltage 111. The voltage vector 110 may generate a rotation magnetic flux within the first duration, so as to drive the rotor of the multi-phase motor to rotate. It is worth noting that the zero vector voltage 111 does not generate an effective current, and thus not generate a rotation magnetic flux to drive the rotor of the multi-phase motor to rotate. However, the control period is short, correspondingly, the second duration is short, thus, firstly, the first controllable fundamental voltage vector is controlled to act, then the zero vector voltage is controlled to act, in this way, though the zero vector voltage 111 (U7) does not generate the effective current within the second duration, the rotor of the multi-phase motor may also rotate according to inertia.

Accordingly, when the rotor is located in the first region, the rotor of the multi-phase motor may be controlled to continue rotating by using one controllable fundamental voltage vector and the controllable zero vector voltage so as to ensure that the multi-phase motor may run normally within this period.

It is worth noting that the rotor rotates depending on the inertia within the second duration, torque outputted by the motor is small, so in this case, the motor works in a limping mode, a vehicle may travel with limited power, the driver can conveniently operate subsequently, and the vehicle is moved to a safe position or to a repair shop.

By adopting the above technical solution, on a condition that the multi-phase motor has the phase loss fault, the motor may also start normally and works in the limping mode, the driver can conveniently move the vehicle to the safe position or to the repair shop, and driving safety is improved.

In another example, in response to determining that the target region is the third region, the control policy corresponding to the target region is determined to be the space vector pulse width modulation control policy, and the multi-phase motor is controlled based on the space vector pulse width modulation control policy.

The fundamental voltage vectors 110, 010 and 011 in the third region are all controllable, any two fundamental voltage vectors may be combined to form a target voltage vector, so when the rotor is located in the third region, the multi-phase motor may be controlled based on the space vector pulse width modulation control policy.

For example, the included angle between the target voltage vector $U_{ref}$ and the preset stationary coordinate axis $\alpha$ is $\theta$, the control period is T, when the target voltage vector is located in the sector III in the voltage vector space shown in Fig. 5, the target voltage vector may be obtained by combining the fundamental voltage vector 010 (U2), the fundamental voltage vector 011 (U3) and the zero vector voltage U7. It is assumed that $U\alpha$ and $U\beta$ respectively represent voltage components of the target voltage vector in the coordinate system $\alpha$ and the coordinate system $\beta$ in the stationary coordinate axes, t3 and t4 are respectively durations of the action of the fundamental voltage vector U2 and the action of the fundamental voltage vector U3, and t5 is the duration of the action of the zero vector voltage U7. The above durations may be determined through the following formula:

$$t3 = T * \frac{\sqrt{3} * U\beta}{Udc}$$

$$t4 = -T * \frac{3 * U\alpha + \sqrt{3} * U\beta}{2 * Udc}$$

$$t5 = T - t3 - t4$$

where $Udc$ is a power supply voltage. It is worth noting that when the target voltage vector is located in the sector III, a component $U\alpha$ of the target voltage vector in the coordinate system $\alpha$ in the stationary coordinate axis is a negative number, and thus, the calculated t4 is a positive number.

After t3, t4 and t5 are calculated, firstly, the fundamental voltage vector U2 is controlled to act for the duration t3, then the fundamental voltage vector U3 is controlled to act for the duration t4, and finally, the zero vector voltage U7 is controlled to act for the duration t5.

In yet another example, in response to determining that the target region is the second region, the control policy corresponding to the target region is determined to be the zero vector voltage control policy, and the multi-phase motor is controlled based on the controllable zero vector voltage within the current control period.

Though there is the controllable fundamental voltage vector in the second region, the magnetic field force direction of the controllable fundamental voltage vector is opposite to the rotation direction of the multi-phase motor, the multi-phase motor cannot be controlled by using the controllable fundamental voltage vector, so in the example, the multi-phase motor can be controlled merely based on the controllable zero vector voltage within the current control period.

In the disclosure, though the controllable zero vector voltage does not generate the effective current and cannot control the multi-phase motor to rotate, the rotor may rotate normally when moving to the third region, so in the second region, the rotor may rotate according to inertia.

By adopting the above technical solution, on a condition that the multi-phase motor has the phase loss fault, the multi-phase motor is controlled to rotate by using the different control policies when the rotor rotates to the different regions, accordingly, the defect that the multi-phase motor cannot start when having the phase loss fault can be avoided, and it is ensured that the vehicle can travel to the safe position in a mode of limited-power traveling.

Based on the same inventive concept, the disclosure further provides a multi-phase motor control apparatus. Fig. 10 is a block diagram of a multi-phase motor control apparatus shown according to an example. As shown in Fig. 10, the multi-phase motor control apparatus 10 may include:

an acquiring module 101, configured to acquire a current position of a rotor of a multi-phase motor on a condition that the multi-phase motor has a phase loss fault;

a first determining module 102, configured to determine a target region to which the rotor currently belongs in a voltage vector space of the multi-phase motor according to the current position of the rotor, where the voltage vector space is pre-divided into a plurality of regions, and the target region is one of the plurality of regions; and

a control module 103, configured to control the multi-phase motor based on a control policy corresponding to the target region.

Optionally, the plurality of regions include a first region and a second region, and the apparatus may further include:

a second determining module, configured to determine a half-bridge state of a target phase to which the phase loss fault occurs on a condition that the multi-phase motor has the phase loss fault;

a second determining module, configured to determine a controllable voltage vector in the voltage vector space according to the half-bridge state of the target phase, where the controllable voltage vector includes a controllable fundamental voltage vector and a controllable zero vector voltage; and

a dividing module, configured to obtain the first region and the second region by dividing the voltage vector space according to the controllable voltage vector and a rotation direction of the multi-phase motor, where the first region and the second region each include a controllable fundamental voltage vector, a magnetic field force direction of a first controllable fundamental voltage vector included in the first region is the same as the rotation direction of the multi-phase motor, and a magnetic field force direction of a second controllable fundamental voltage vector included in the second region is opposite to the rotation direction of the multi-phase motor.

Optionally, the control module 103 includes:
a first determining sub-module, configured to determine the control policy corresponding to the target region to be a single voltage vector control policy in response to determining that the target region is the first region, and control the multi-phase motor based on the single voltage vector control policy.

Optionally, the first determining sub-module includes:

a second determining sub-module, configured to determine a target voltage vector of the multi-phase motor according to the current position of the rotor;

a third determining sub-module, configured to determine a rotation angle of the target voltage vector rotating to a position of the first controllable fundamental voltage vector included in the first region in the rotation direction of the multi-phase motor;

a fourth determining sub-module, configured to determine a first duration of action of the first controllable fundamental voltage vector according to the rotation angle and the target voltage vector; and

a control sub-module, configured to control the multi-phase motor for the first duration with the first controllable fundamental voltage vector, and control the multi-phase motor for a second duration with the controllable zero vector voltage in response to determining that the first duration ends, where a sum of the first duration and the second duration is a control period.

Optionally, the fourth determining sub-module is configured to: determine the first duration of action of the first controllable fundamental voltage vector through the following formula:

$$t1 = f\left(\delta\right) * U_{ref}$$

where t1 represents the first duration, $U_{ref}$ represents the target voltage vector, and $f(\delta)$ is an increasing function of the rotation angle $\delta$.

Optionally, the control module 103 includes:
a fifth determining sub-module, configured to determine the control policy corresponding to the target region to be a zero vector voltage control policy in response to determining that the target region is the second region, and control the multi-phase motor within a current control period based on the controllable zero vector voltage.

Optionally, the plurality of regions further include a third region composed of the controllable fundamental voltage vector, and the control module 103 includes:
a sixth determining sub-module, configured to determine the control policy corresponding to the target region to be a space vector pulse width modulation control policy in response to determining that the target region is the third region, and control the multi-phase motor based on the space vector pulse width modulation control policy.

As for the apparatus in the above examples, a specific mode of each module for executing an operation has been described in detail in the example related to the method, which is not described in detail here.

The disclosure further provides a computer-readable storage medium, storing computer program instructions, the program instructions, when executed by a processor, implementing steps of the multi-phase motor control method provided by the disclosure.

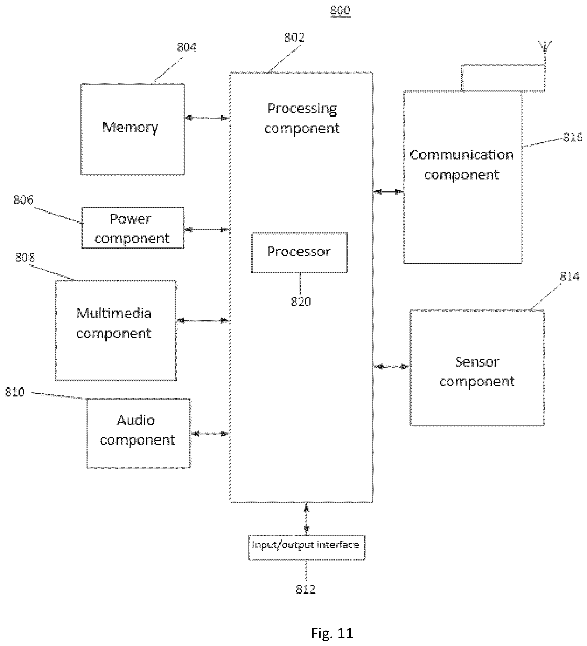

Fig. 11 is a block diagram of a multi-phase motor control apparatus shown according to an example. For example, the apparatus 800 may be a mobile phone, a computer, a digital broadcast terminal, a messaging device, a game console, a tablet device, a medical device, a fitness facility, a personal digital assistant and the like.

Referring to Fig. 11, the apparatus 800 may include one or more components as follows: a processing component 802, a memory 804, a power component 806, a multimedia component 808, an audio component 810, an input/output (I/O) interface 812, a sensor component 814 and a communication component 816.

The processing component 802 generally controls whole operation of the apparatus 800, such as operations related to display, phone call, data communication, camera operation and recording operation. The processing component 802 may include one or more processors 820 for executing instructions so as to complete all or part of steps of the multi-phase motor control method. Besides, the processing component 802 may include one or more modules to facilitate interaction between the processing component 802 and the other components. For example, the processing component 802 may include a multimedia module so as to facilitate interaction between the multimedia component 808 and the processing component 802.

The memory 804 is configured to store various types of data so as to support operations on the apparatus 800. Examples of these data include instructions of any application program or method for operation on the apparatus 800, contact person data, telephone directory data, messages, pictures, videos and the like. The memory 804 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or a compact disc.

The power component 806 provides electric power for various components of the apparatus 800. The power component 806 may include a power management system, one or more power sources, and other components related to power generation, management and distribution for the apparatus 800.

The multimedia component 808 includes a screen which provides an output interface between the apparatus 800 and a user. In some examples, the screen may include a liquid crystal display (LCD) and a touch panel (TP). If the screen includes the touch panel, the screen may be implemented as a touch screen so as to receive an input signal from the user. The touch panel includes one or more touch sensors so as to sense touching, swiping and gestures on the touch panel. The touch sensor can not only sense a boundary of a touching or swiping action, but also detect duration and pressure related to touching or swiping operation. In some examples, the multimedia component 808 includes a front camera and/or a back camera. When the apparatus 800 is in an operation mode, such as a photographing mode or a video mode, the front camera and/or the back camera can receive external multimedia data. Each front camera and each back camera may be a fixed optical lens system or have a focal length and an optical zoom capability.

The audio component 810 is configured to output and/or input an audio signal. For example, the audio component 810 includes a microphone (MIC). When the apparatus 800 is in the operation mode, such as a call mode, a recording mode and a voice recognition mode, the microphone is configured to receive an external audio signal. The received audio signal may be further stored in the memory 804 or sent via the communication component 816. In some examples, the audio component 810 further includes a speaker for outputting the audio signal.

The I/O interface 812 provides an interface between the processing component 802 and a peripheral interface module, and the above peripheral interface module may be a keyboard, a click wheel, buttons and the like. These buttons may include but are not limited to: a home button, a volume button, a start button and a lock button.

The sensor component 814 includes one or more sensors, configured to provide state evaluation of various aspects for the apparatus 800. For example, the sensor component 814 may detect a start/shut-down state of the apparatus 800 and relative positioning of the components, for example, the components are a display and a keypad of the apparatus 800. The sensor component 814 may further detect location change of the apparatus 800 or one component of the apparatus 800, whether there is contact between the user and the apparatus 800, azimuth or speed up/speed down of the apparatus 800 and temperature change of the apparatus 800. The sensor component 814 may include a proximity sensor, configured to detect existence of a nearby object without any physical contact. The sensor component 814 may further include an optical sensor, such as a CMOS or CCD image sensor, for use in imaging application. In some examples, the sensor component 814 may further include an acceleration sensor, a gyroscope sensor, a magnetic sensor, a pressure sensor or a temperature sensor.

The communication component 816 is configured to facilitate wired or wireless communication between the apparatus 800 and other devices. The apparatus 800 may be accessed to a wireless network based on a communication standard, such as WiFi, 2G or 3G, or their combination. In an example, the communication component 816 receives a broadcast signal or related broadcast information from an external broadcast management system via a broadcast channel. In an example, the communication component 816 further includes a near-field communication (NFC) module so as to facilitate short-range communication. For example, the NFC module may be implemented based on a radio frequency identification (RFID) technology, an infra-red data association (IrDA) technology, an ultra wide band (UWB) technology, a Bluetooth (BT) technology and other technologies.

In an example, the apparatus 800 may be implemented by one or more than one application specific integrated circuit (ASIC), digital signal processor (DSP), digital signal processing device (DSPD), programmable logic device (PLD), field-programmable gate array (FPGA), controller, microcontroller, microprocessor or another electronic element for performing the multi-phase motor control method.

In an example, a non-transitory computer-readable storage medium including instructions is further provided, such as a memory 804 including the instructions. The above instructions may be executed by a processor 820 of an apparatus 800 so as to complete the multi-phase motor control method. For example, the non-transitory computer-readable storage medium may be an ROM, a random access memory (RAM), a CD-ROM, a magnetic tape, a floppy disk, an optical data storage device and the like.

In another example, a computer program product is further provided, the computer program product includes a computer program capable of being executed by a programmable apparatus, and the computer program has a code part which is used for executing, when executed by the programmable apparatus, the above multi-phase motor control method.

Those skilled in the art will easily figure out other implementation solutions of the disclosure after considering the specification and practicing the disclosure. The present application intends to cover any transformation, purpose or adaptive change of the disclosure which conforms to a general principle of the disclosure and includes common general knowledge or conventional technical means which are not disclosed by the disclosure in the technical field. The specification and the examples are merely regarded as examples, and the true scope and spirit of the disclosure are indicated by the following claims.

It is to be understood that the disclosure is not limited to an accurate structure described above and shown in the accompanying drawings, and various modifications and changes can be made without departing from its scope. The scope of the disclosure is limited merely by appended claims.

## Claims

1. A multi-phase motor control method, comprising:

   acquiring a current position of a rotor of a multi-phase motor on a condition that the multi-phase motor has a phase loss fault;
   determining a target region to which the rotor currently belongs in a voltage vector space of the multi-phase motor according to the current position of the rotor, wherein the voltage vector space is pre-divided into a plurality of regions, and the target region is one of the plurality of regions; and
   controlling the multi-phase motor based on a control policy corresponding to the target region.

2. The method according to claim 1, wherein the plurality of regions comprises a first region and a second region, and the voltage vector space is divided into the plurality of regions in the following manner:

   determining a half-bridge state of a target phase to which the phase loss fault occurs on a condition that the multi-phase motor has the phase loss fault;
   determining a controllable voltage vector in the voltage vector space according to the half-bridge state of the target phase, wherein the controllable voltage vector comprises a controllable fundamental voltage vector and a controllable zero vector voltage; and
   obtaining the first region and the second region by dividing the voltage vector space according to the controllable voltage vector and a rotation direction of the multi-phase motor, wherein the first region and the second region each comprise a controllable fundamental voltage vector, a magnetic field force direction of a first controllable fundamental voltage vector comprised in the first region is the same as the rotation direction of the multi-phase motor, and a magnetic field force direction of a second controllable fundamental voltage vector comprised in the second region is opposite to the rotation direction of the multi-phase motor.

3. The method according to claim 2, wherein controlling the multi-phase motor based on the control policy corresponding to the target region comprises:

   determining the control policy corresponding to the target region to be a single voltage vector control policy in response to determining that the target region is the first region, and controlling the multi-phase motor based on the single voltage vector control policy.

4. The method according to claim 3, wherein controlling the multi-phase motor based on the single vector control policy comprises:

   determining a target voltage vector of the multi-phase motor according to the current position of the rotor;
   determining a rotation angle of the target voltage vector rotating to a position of the first controllable fundamental voltage vector comprised in the first region in the rotation direction of the multi-phase motor;
   determining a first duration of action of the first controllable fundamental voltage vector according to the rotation angle and the target voltage vector; and
   controlling the multi-phase motor for the first duration with the first controllable fundamental voltage vector, and controlling the multi-phase motor for a second duration with the controllable zero vector voltage in response to determining that the first duration ends, wherein a sum of the first duration and the second duration is a control period.

5. The method according to claim 4, wherein determining the first duration of action of the first controllable fundamental voltage vector according to the rotation angle and the target voltage vector comprises:

   determining the first duration of action of the first controllable fundamental voltage vector through the following formula:

$$t1 = f\left(\delta\right) * U_{ref}$$

wherein t1 represents the first duration, $U_{ref}$ represents the target voltage vector, and $f(\delta)$ is an increasing function of the rotation angle $\delta$.

6. The method according to claim 2, wherein controlling the multi-phase motor based on the control policy corresponding to the target region comprises:
   determining the control policy corresponding to the target region to be a zero vector voltage control policy in response to determining that the target region is the second region, and controlling the multi-phase motor within a current control period based on the controllable zero vector voltage.

7. The method according to claim 2, wherein the plurality of regions further comprise a third region composed of the controllable fundamental voltage vector, and controlling the multi-phase motor based on the control policy corresponding to the target region comprises:
   determining the control policy corresponding to the target region to be a space vector pulse width modulation control policy in response to determining that the target region is the third region, and controlling the multi-phase motor based on the space vector pulse width modulation control policy.

8. A multi-phase motor control apparatus, comprising:

   an acquiring module, configured to acquire a current position of a rotor of a multi-phase motor on a condition that the multi-phase motor has a phase loss fault;
   a first determining module, configured to determine a target region to which the rotor currently belongs in a voltage vector space of the multi-phase motor according to the current position of the rotor, wherein the voltage vector space is pre-divided into a plurality of regions, and the target region is one of the plurality of regions; and
   a control module, configured to control the multi-phase motor based on a control policy corresponding to the target region.

9. A multi-phase motor control apparatus, comprising:

   a processor; and
   a memory configured to store instructions executable by the processor;
   wherein the processor is configured to:

   acquire a current position of a rotor of a multi-phase motor on a condition that the multi-phase motor has a phase loss fault;

determine a target region to which the rotor currently belongs in a voltage vector space of the multi-phase motor according to the current position of the rotor, wherein the voltage vector space is pre-divided into a plurality of regions, and the target region is one of the plurality of regions; and control the multi-phase motor based on a control policy corresponding to the target region.

10. A computer-readable storage medium, storing computer program instructions, wherein the program instructions, when executed by a processor, implement steps of the method according to any one of claims 1 to 7.

11. A computer program product, comprising a computer program capable of being executed by a programmable apparatus, and the computer program which is used for implementing, when executed by the programmable apparatus, steps of the method according to any one of claims 1 to 7.

Fig. 1

Fig. 2

Acquire a current position of a rotor of a multi-phase motor in the case that the multi-phase motor has a phase loss fault — S31

Determine a target region to which the rotor currently belongs in a voltage vector space of the multi-phase motor according to the current position of the rotor — S32

Control the multi-phase motor on the basis of a control policy corresponding to the target region — S33

Fig. 3

Q1 Q3 Q5

U
V
W

Q2 Q4 Q6

Fig. 4

Fig. 5

Determine a half-bridge state of a target phase to which a phase loss fault occurs in the case that a multi-phase motor has the phase loss fault — S61

Determine a controllable voltage vector in a voltage vector space according to the half-bridge state of the target phase — S62

Obtain a first region and a second region by dividing the voltage vector space according to the controllable voltage vector and a rotation direction of the multi-phase motor — S63

Fig. 6

Fig. 7

```
                                ( Begin )
                                    │
    ┌───────────────────────────────┘
    │                               ▼
    │   ┌─────────────────────────────────────────────────────┐
    │   │ Acquire a current position of a rotor of a multi-phase│
    │   │ motor in the case that the multi-phase motor has a    │   S81
    │   │ phase loss fault                                      │
    │   └─────────────────────────────────────────────────────┘
    │                               │
    │                               ▼
    │   ┌─────────────────────────────────────────────────────┐
    │   │ Determine a target region to which the rotor currently│   S82
    │   │ belongs in a voltage vector space of the multi-phase  │
    │   │ motor according to the current position of the rotor  │
    │   └─────────────────────────────────────────────────────┘
    │          │                    │                    │
    │  S83     ▼            S84      ▼           S85      ▼
    │ ┌──────────────────┐ ┌──────────────────┐ ┌──────────────────┐
    │ │ Control the multi-│ │ Control the multi-│ │ Control the multi-│
    │ │ phase motor on the│ │ phase motor on the│ │ phase motor on the│
    │ │ basis of a single │ │ basis of a zero   │ │ basis of a space  │
    │ │ voltage vector    │ │ vector voltage    │ │ vector pulse width│
    │ │ control policy    │ │ control policy    │ │ modulation control│
    │ │                   │ │                   │ │ policy            │
    │ └──────────────────┘ └──────────────────┘ └──────────────────┘
    │          │                    │                    │
    │          │            S86     ▼                    │
    │          │      ┌──────────────────────────┐       │
    │          └─────▶│    Output a PWM signal     │◀──────┘
    │                 └──────────────────────────┘
    │                               │
    └───────────────────────────────┘
```

Fig. 8

Determine a target voltage vector of a multi-phase motor according to a current position of a rotor — S91

Determine a rotation angle of the target voltage vector rotating to a position of a first controllable fundamental voltage vector included in a first region in a rotation direction of the multi-phase motor — S92

Determine a first duration of action of the first controllable fundamental voltage vector according to the rotation angle and the target voltage vector — S93

Control the multi-phase motor for the first duration with the first controllable fundamental voltage vector, and control the multi-phase motor for a second duration with a controllable zero vector voltage in response to determining that the first duration ends — S94

Fig. 9

10

Multi-phase motor control apparatus

Acquiring module — 101

First determining module — 102

Control module — 103

Fig. 10

800

804

802

816

Memory

Processing
component

Communication
component

806

Power
component

Processor

820

808

Multimedia
component

814

810

Sensor
component

Audio
component

Input/output interface

812

Fig. 11

| INTERNATIONAL SEARCH REPORT | International application No. |
|---|---|
| | **PCT/CN2022/090571** |

**A. CLASSIFICATION OF SUBJECT MATTER**

H02P 29/028(2016.01)i; H02P 25/22(2006.01)i; H02P 21/18(2016.01)i; H02P 29/024(2016.01)i; H02P 27/06(2006.01)i; H02P 21/14(2016.01)i

According to International Patent Classification (IPC) or to both national classification and IPC

**B. FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

DWPI; SIPOABS; CNTXT; USTXT; CNKI; IEEE: 缺相, 开路, 断路, 短路, 故障, 容错, 电机, 电动机, 马达, 绕组, 转子, 位置, 角, 电压, 矢量, 零, 相反, 但, 仅, 只, 方向, 区域, 扇区, 空间, phase deficiency, open circuit, short circuit, fault, fault tolerance, motor, winding, phase, rotor, position, angle, voltage, vector, zero, only, one, single, section

**C. DOCUMENTS CONSIDERED TO BE RELEVANT**

| Category* | Citation of document, with indication, where appropriate, of the relevant passages | Relevant to claim No. |
|---|---|---|
| PX | CN 114301372 A (MILLET AUTOMOBILE TECHNOLOGY LIMITED COMPANY) 08 April 2022 (2022-04-08) description, paragraphs [0004]-[0056] | 1-11 |
| X | CN 106487308 A (FUZHOU UNIVERSITY) 08 March 2017 (2017-03-08) description, paragraphs [0061]-[0151], and figures 1-8 | 1-3, 7-11 |
| X | CN 112910376 A (CRRC ZHUZHOU INSTITUTE CO., LTD.) 04 June 2021 (2021-06-04) description, paragraphs [0072]-[0171], and figures 1-6 | 1-3, 7-11 |
| A | JP 2019140778 A (PANASONIC IP MAN CORP.) 22 August 2019 (2019-08-22) entire document | 1-11 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2022** | **02 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/090571**

| Patent document cited in search report | | | Publication date (day/month/year) | Patent family member(s) | | | Publication date (day/month/year) |
|---|---|---|---|---|---|---|---|
| CN | 114301372 | A | 08 April 2022 | None | | | |
| CN | 106487308 | A | 08 March 2017 | CN | 106487308 | B | 22 February 2019 |
| CN | 112910376 | A | 04 June 2021 | None | | | |
| JP | 2019140778 | A | 22 August 2019 | CN | 110138310 | A | 16 August 2019 |

Form PCT/ISA/210 (patent family annex) (January 2015)

**REFERENCES CITED IN THE DESCRIPTION**

**Patent documents cited in the description**

- CN 202111670099